(19) **Europäisches Patentamt**
**European Patent Office**
**Office européen des brevets**

(11) **EP 4 757 261 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
*H04L 27/26* *(2006.01)*

(21) Application number: **23950224.8**

(52) Cooperative Patent Classification (CPC):
**H04L 27/26**

(22) Date of filing: **31.08.2023**

(86) International application number:
**PCT/CN2023/116284**

(87) International publication number:
**WO 2025/043641 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen 518129 (CN)**

(72) Inventors:
• **QU, Huiyang
Shenzhen, Guangdong 518129 (CN)**
• **HUANG, Huang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) A communication method and apparatus are provided, and relate to the field of communication technologies, to reduce a peak-to-average power ratio in single-carrier transmission and improve transmission performance. A transmitter modulates user data and a reference signal to obtain a first symbol sequence, where the first symbol sequence includes a first sequence corresponding to the user data and a second sequence corresponding to the reference signal; and determines average transmit power of the user data based on a first parameter, and determines average transmit power of the reference signal based on a second parameter; and outputs the first symbol sequence. The first parameter indicates a power adjustment coefficient corresponding to the user data, the second parameter indicates a power adjustment coefficient corresponding to the reference signal, the first parameter is a preset value and/or the second parameter is a preset value, or a relationship between the first parameter and the second parameter is associated with a quantity of resource elements corresponding to the first sequence, a quantity of resource elements corresponding to the second sequence, or a first indicator, where the first indicator indicates a resource occupation status corresponding to the first sequence and/or a resource occupation status corresponding to the second sequence.

```
┌─────────────────────────────────────────────────┐
│ A first apparatus modulates user data and a      │──── 701
│ reference signal to obtain a first symbol         │
│ sequence                                          │
└─────────────────────────────────────────────────┘
                        │
                        ▼
┌─────────────────────────────────────────────────┐
│ The first apparatus determines average transmit  │──── 702
│ power of the user data based on a first           │
│ parameter, and determines average transmit        │
│ power of the reference signal based on a second   │
│ parameter                                         │
└─────────────────────────────────────────────────┘
                        │
                        ▼
┌─────────────────────────────────────────────────┐
│ The first apparatus outputs the first symbol      │──── 703
│ sequence                                          │
└─────────────────────────────────────────────────┘
```

FIG. 7

**EP 4 757 261 A1**

**Description**

**TECHNICAL FIELD**

This application relates to the field of communication technologies, and in particular, to a communication method and apparatus.

**BACKGROUND**

A communication system includes single-carrier transmission and multi-carrier transmission technologies. A problem that may be encountered in orthogonal frequency division multiplexing (orthogonal frequency division multiplexing, OFDM) multi-carrier transmission is that a peak-to-average power ratio (Peak-to-average ratio, PAPR) is high, causing non-linear distortion of a signal. Conversely, a PAPR of single-carrier transmission is generally low.

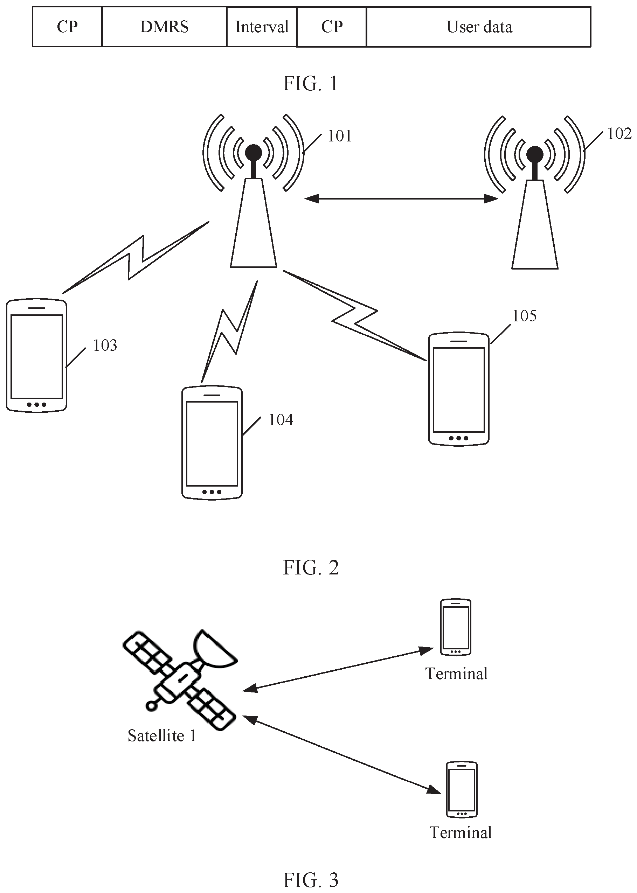

For the single-carrier transmission, for example, in a frame structure of single-carrier transmission shown in FIG. 1, a demodulation reference signal (Demodulation reference signal, DMRS) and user data (data) may be transmitted in a single-carrier symbol in a form of time division multiplexing. However, in actual transmission, a modulation sequence with a low PAPR, for example, a binary phase shift keying (Binary Phase Shift Keying, BPSK) sequence or a ZC sequence, is usually used for a DMRS part. A modulation sequence with a high PAPR, for example, quadrature amplitude modulation (Quadrature Amplitude Modulation, QAM) like 16-QAM or 64-QAM, is usually used for a data part. Therefore, for an overall single-carrier transmission periodicity, an overall PAPR of a transmitted signal is still high. Therefore, how to effectively reduce the PAPR in the single-carrier transmission is an urgent problem to be resolved in this application.

**SUMMARY**

Embodiments of this application provide a communication method and apparatus, to reduce a PAPR in single-carrier transmission.

To achieve the foregoing objective, this application uses the following technical solutions.

According to a first aspect, a communication method is provided, applied to a transmitter. The method includes: modulating user data and a reference signal to obtain a first symbol sequence, where the first symbol sequence includes a first sequence corresponding to the user data and a second sequence corresponding to the reference signal; determining average transmit power of the user data based on a first parameter, and determining average transmit power of the reference signal based on a second parameter, where the first parameter indicates a power adjustment coefficient corresponding to the user data, the second parameter indicates a power adjustment coefficient corresponding to the reference signal, the first parameter is a preset value and/or the second parameter is a preset value, or a relationship between the first parameter and the second parameter is determined based on at least one of the following information: a quantity of resource elements corresponding to the first sequence, a quantity of resource elements corresponding to the second sequence, or a first indicator, where the first indicator indicates a resource occupation status corresponding to the first sequence and/or a resource occupation status corresponding to the second sequence; and outputting the first symbol sequence.

In the foregoing implementation, the transmit power of the user data and the transmit power of the reference signal that are included in one transmission periodicity are adjusted by configuring power adjustment coefficients. On the basis that the overall transmit power remains unchanged, the average transmit power of the reference signal and the average transmit power of the user data may be adjusted, thereby reducing an overall peak-to-average power ratio of the transmission periodicity, and improving transmission performance.

In an implementation, that the first parameter and/or the second parameter are/is a preset value specifically includes: the first parameter corresponds to a modulation and coding scheme MCS and/or the second parameter corresponds to a modulation and coding scheme MCS; or the first parameter corresponds to a generation manner of the reference signal and/or the second parameter corresponds to a generation manner of the reference signal; or the first parameter corresponds to a modulation scheme of the user data and/or the second parameter corresponds to a modulation scheme of the user data; or the first parameter corresponds to a generation manner of the reference signal and a modulation scheme of the user data and/or the second parameter corresponds to a generation manner of the reference signal and a modulation scheme of the user data.

In the foregoing possible implementation, the power adjustment coefficient like a value of the first parameter or a value of the second parameter may be preset, to improve convenience and flexibility of implementing power adjustment. The preset value of the first parameter or the second parameter is related to a modulation and coding scheme MCS, a generation manner of the reference signal, a modulation scheme of the user data, or the like. In this case, the transmitter may determine the preset value of the first parameter or the second parameter based on the related parameter, to adjust the transmit power of the user data and/or the reference signal, and reduce the peak-to-average power ratio.

In an implementation, that the first parameter is the preset value specifically includes: The preset value of the first parameter is 1, 0.9, 0.85, 0.82, 0.8, 0.77, 0.75, 0.5, 0.48, or 0.45. Therefore, a receiver and the transmitter may separately determine the power adjustment coefficient for the user data based on the configured preset value of the first parameter. Further, optionally, the power adjustment coefficient for the reference signal may be further determined based on the association relationship between the first parameter and the second parameter or based on the preset value corresponding to the second parameter. This can reduce a peak-to-average power ratio, and this solution is simple and flexible to implement.

In an implementation, the first indicator includes at least one of the following information: a data-to-reference signal resource ratio, a reference signal resource overhead, and data transmission efficiency, where the data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

In the foregoing possible implementation, the power adjustment coefficient such as the first parameter or the second parameter may alternatively be determined based on an association relationship between the first parameter and the second parameter, and the power adjustment coefficient is associated with the first indicator, in other words, the value of the first parameter and/or the value of the second parameter may be determined based on a data-to-reference signal resource ratio, the reference signal resource overhead, data transmission efficiency, or the like. In this way, improve implementation convenience and flexibility of power adjustment, and a gain obtained after the power adjustment can achieve an expected effect.

In an implementation, the relationship between the first parameter $\alpha$ and the second parameter $\beta$ satisfies at least one of the following conditions: $\alpha*A+\beta*B=A+B$, where A indicates the quantity of resource elements corresponding to the first sequence, B indicates the quantity of resource elements corresponding to the second sequence, and both A and B are positive integers; or $\beta=1+(1-\alpha)*P$, where P indicates the data-to-reference signal resource ratio, and P=A/B; or $\beta=1+(1-\alpha)*(1/S-1)$, where S indicates the reference signal overhead, or $\beta=1+(1-\alpha)*J/(1-J)$, where J indicates the data transmission rate; or the like.

In the foregoing possible implementation, based on a principle that the overall transmit power remains unchanged before and after the power adjustment, the relationship that the first parameter and the second parameter meet may be obtained, so that in actual application, the power adjustment coefficient may be determined by presetting/predefining a parameter value and then calculating another parameter value according to the foregoing formula. In this way, implementation convenience and flexibility of power adjustment are improved, and a gain obtained after the power adjustment can achieve expected effect.

In an implementation, if the user data includes user data of a first user and user data of a second user, the relationship between the first parameter and the second parameter satisfies: $\alpha1*A1+\alpha2*A2+\beta*B=A1+A2+B$, where the first parameter includes $\alpha1$ and $\alpha2$, $\alpha1$ indicates a power adjustment coefficient corresponding to the user data of the first user, $\alpha2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

In the foregoing possible implementation, the implementation solution of this application is applied to a multi-user scenario, and an association relationship between a plurality of power adjustment parameters may be obtained. In this case, a specific value of the power adjustment parameter may be set based on the association relationship, to reduce a peak-to-average power ratio and improve transmission performance.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and $\beta$ indicates the second parameter, the method further includes: determining $\alpha1$ and $\alpha2$, where if a modulation order corresponding to the user data of the first user is higher than a modulation order corresponding to the user data of the second user, $\alpha1<\alpha2$; and determining the second parameter $\beta$ based on $\alpha1$ and $\alpha2$.

In the foregoing possible implementation, the implementation solution of this application is applied to a multi-user scenario, and a corresponding power adjustment coefficient may be configured based on a modulation order of user data. For example, user data with a higher modulation order corresponds to a smaller power adjustment coefficient, that is, transmit power is reduced to a higher degree, and effect of reducing an overall transmission peak-to-average power ratio is more significant, thereby improving transmission performance of the system.

In an implementation, if the user data includes the user data of the first user and the user data of the second user, the first parameter includes $\alpha1$ and $\alpha2$, $\alpha1$ indicates the power adjustment coefficient corresponding to the user data of the

first user, $\alpha 2$ indicates the power adjustment coefficient corresponding to the user data of the second user, and $\beta$ indicates the second parameter, the method further includes: determining $\alpha 1$ and $\alpha 2$, where if a modulation and coding scheme MCS index value corresponding to the user data of the first user is higher than an MCS index value corresponding to the user data of the second user, $\alpha 1 < \alpha 2$; and determining the second parameter $\beta$ based on $\alpha 1$ and $\alpha 2$.

In the foregoing possible implementation, the implementation solution of this application is applied to a multi-user scenario, and a corresponding power adjustment coefficient may be configured based on a modulation and coding scheme MCS index value of user data. For example, user data with a higher MCS index value corresponds to a smaller power adjustment coefficient, that is, transmit power is reduced to a higher degree, and effect of reducing an overall transmission peak-to-average power ratio is more significant, thereby improving transmission performance of the system.

In an implementation, the first parameter and the second parameter satisfy: a ratio of maximum transmit power to average transmit power of the first symbol sequence is less than or equal to a first threshold; and/or a maximum amplitude value for transmitting the first symbol sequence is less than or equal to a second threshold.

In the foregoing possible implementation, the determined power adjustment coefficient needs to meet a condition related to a peak-to-average power ratio, that is, after power adjustment is performed on the first symbol sequence, a corresponding peak-to-average power ratio or amplitude peak value does not exceed the preset threshold. If the foregoing condition is not met, the transmitter may reset the power adjustment coefficient, to reduce an overall peak-to-average power ratio of a transmission signal and improve transmission performance.

In an implementation, the method further includes: sending at least one of the following information: a parameter index value, the first parameter, the second parameter, or the association relationship between the first parameter and the second parameter, where the parameter index value indicates a preset value corresponding to the first parameter and/or a preset value corresponding to the second parameter.

In the foregoing possible implementation, the transmitter may send the determined value of the power adjustment coefficient, or the related parameter index, or the parameter determining method to the receiver, so that the receiver determines the corresponding power adjustment coefficient, and can further perform channel estimation and data demodulation, thereby improving transmission efficiency.

In an implementation, the method further includes: adjusting a first modulation and coding scheme MCS index value to a second MCS index value based on the first parameter and the second parameter, where a modulation order corresponding to the first MCS index value is the same as a modulation order corresponding to the second MCS index value.

In the foregoing possible implementation, after the power adjustment coefficient is determined, the MCS index value may be adjusted based on the power adjustment gain, for example, a related parameter like a target transmission code rate is adjusted, to further improve transmission performance.

According to a second aspect, a communication method is provided, applied to a receiver. The method includes: receiving first information, where the first information includes at least one of the following information: a parameter index value, a first parameter, a second parameter, or an association relationship between a first parameter and a second parameter, the first parameter indicates a power adjustment coefficient corresponding to user data, the second parameter indicates a power adjustment coefficient corresponding to a reference signal, and the parameter index value indicates a preset value corresponding to the first parameter and/or a preset value corresponding to the second parameter; receiving second information, where the second information includes a first symbol sequence, and the first symbol sequence includes a first sequence corresponding to the user data and a second sequence corresponding to the reference signal; and demodulating the first symbol sequence based on the first information.

In an implementation, the first parameter corresponds to a modulation and coding scheme MCS and/or the second parameter corresponds to a modulation and coding scheme MCS; or the first parameter corresponds to a generation manner of the reference signal and/or the second parameter corresponds to a generation manner of the reference signal; or the first parameter corresponds to a modulation scheme of the user data and/or the second parameter corresponds to a modulation scheme of the user data; or the first parameter corresponds to a generation manner of the reference signal and a modulation scheme of the user data and/or the second parameter corresponds to a generation manner of the reference signal and a modulation scheme of the user data.

In an implementation, the association relationship between the first parameter and the second parameter includes: The relationship between the first parameter and the second parameter is determined based on at least one of the following information: a quantity of resource elements corresponding to the first sequence, a quantity of resource elements corresponding to the second sequence, or a first indicator, where the first indicator indicates a resource occupation status corresponding to the first sequence and/or a resource occupation status corresponding to the second sequence.

In an implementation, the first indicator includes at least one of the following information: a data-to-reference signal resource ratio, a reference signal resource overhead, and data transmission efficiency, where the data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

In an implementation, the relationship between the first parameter $\alpha$ and the second parameter $\beta$ satisfies at least one of the following conditions: $\alpha*A+\beta*B=A+B$, where A indicates the quantity of resource elements corresponding to the first sequence, B indicates the quantity of resource elements corresponding to the second sequence, and both A and B are positive integers; or $\beta=1+(1-\alpha)*P$, where P indicates the data-to-reference signal resource ratio, and P=A/B; or $\beta=1+(1-\alpha)*(1/S-1)$, where S indicates the reference signal overhead, or $\beta=1+(1-\alpha)*J/(1-J)$, where J indicates the data transmission rate; or the like.

In an implementation, if the user data includes user data of a first user and user data of a second user, the relationship between the first parameter and the second parameter satisfies: $\alpha1*A1+\alpha2*A2+\beta*B=A1+A2+B$, where the first parameter includes $\alpha1$ and $\alpha2$, $\alpha1$ indicates a power adjustment coefficient corresponding to the user data of the first user, $\alpha2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and a modulation order corresponding to the user data of the first user is higher than a modulation order corresponding to the user data of the second user, $\alpha1<\alpha2$.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and an MCS index value corresponding to the user data of the first user is greater than an MCS index value corresponding to the user data of the second user, $\alpha1<\alpha2$.

According to a third aspect, a communication apparatus is provided, to implement the foregoing methods. The communication apparatus may be the transmitter in the first aspect; or an apparatus including the foregoing transmit function; or a module in the transmitter in the first aspect, for example, a chip, a chip system, or a circuit; or a logical node, a logical module, or software that can implement some or all functions of the transmitter.

Alternatively, the communication apparatus may be the receiver in the second aspect; or an apparatus including the receiving function; or a module in the receiver in the second aspect, for example, a chip, a chip system, or a circuit; or a logical node, a logical module, or software that can implement some or all functions of the receiver.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and a transceiver module. The processing module may be configured to implement a processing function in any one of the foregoing aspects or the possible implementations of the foregoing aspects. The processing module may be, for example, a processor. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

With reference to the third aspect, in a possible implementation, the transceiver module includes a sending module and a receiving module, which are respectively configured to implement the sending function and the receiving function in any one of the foregoing aspects and the possible implementations of the foregoing aspects.

According to a fourth aspect, a communication apparatus is provided, including a processor. The processor is configured to: after being coupled to a memory and reading instructions in the memory, perform the method according to any one of the foregoing aspects according to the instructions. The communication apparatus may be the transmitter in any one of the first aspect and the possible implementations of the first aspect; or an apparatus including the foregoing transmit function; or a module in the transmitter, for example, a chip, a chip system, or a circuit; or a logical node, a logical module, or software that can implement some or all functions of the transmitter.

Alternatively, the communication apparatus may be the transmitter in any one of the second aspect and the possible implementations of the second aspect; or an apparatus including the foregoing transmit function; or a module in the transmitter, for example, a chip, a chip system, or a circuit; or a logical node, a logical module, or software that can implement some or all functions of the transmitter.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is a chip system, the communication apparatus may include a chip; or may include a chip and another discrete component.

According to a fifth aspect, a communication apparatus is provided, and includes a processor and an interface circuit. The interface circuit is configured to receive a computer program or instructions, and transmit the computer program or the instructions to the processor. The processor is configured to execute the computer program or the instructions, to enable the communication apparatus to perform the method according to any one of the foregoing aspects. The communication apparatus may be the transmitter in any one of the first aspect and the possible implementations of the first aspect; or an apparatus including the foregoing transmit function; or a module in the transmitter, for example, a chip, a chip system, or a circuit; or a logical node, a logical module, or software that can implement some or all functions of the transmitter.

Alternatively, the communication apparatus may be the receiver in any one of the second aspect and the possible implementations of the second aspect; or an apparatus including the foregoing receiving function; or a module in the receiver, for example, a chip, a chip system, or a circuit; or a logical node, a logical module, or software that can implement some or all functions of the receiver.

With reference to the fifth aspect, in a possible implementation, the communication apparatus is a chip or a chip system. Optionally, when the communication apparatus is a chip system, the communication apparatus may include a chip; or may include a chip and another discrete component.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communication system is provided. The communication system includes a communication apparatus configured to perform the method according to any one of the first aspect and the possible implementations of the first aspect, and a communication apparatus configured to perform the method according to any one of the second aspect and the possible implementations of the second aspect.

For technical effect brought by any one of the possible implementations of the second aspect to the eighth aspect, refer to technical effect brought by different possible implementations of the first aspect. Details are not described herein again.

It can be understood that the solutions in the foregoing aspects may be combined if the solutions are not contradictory.

## BRIEF DESCRIPTION OF DRAWINGS

FIG. 1 is a diagram of single-carrier transmission according to an embodiment of this application;
FIG. 2 to FIG. 5 are diagrams of structures of several communication systems according to an embodiment of this application;
FIG. 6 is a diagram of a structure of a communication apparatus according to an embodiment of this application;
FIG. 7 is a schematic flowchart of a communication method according to an embodiment of this application;
FIG. 8 is a diagram of a transmitted data symbol according to an embodiment of this application;
FIG. 9 is a schematic flowchart of another communication method according to an embodiment of this application;
FIG. 10 is a diagram of another transmitted data symbol according to an embodiment of this application;
FIG. 11 is a diagram of effect of a communication method according to an embodiment of this application; and
FIG. 12 is a diagram of a structure of another communication apparatus according to an embodiment of this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application.

The following terms "first", "second", and the like are merely used for description, and shall not be understood as an indication or implication of relative importance or an implicit indication of a quantity of indicated technical features. Therefore, a feature limited by "first", "second", or the like may explicitly or implicitly include one or more features.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium.

Before the technical solutions of this application are described, related technical terms and procedures in this application are explained and described. It can be understood that the descriptions are intended to make this application easier to understand, but should not be construed as a limitation on the protection scope claimed in this application.

1. Single-carrier transmission: The single-carrier transmission refers to a modulation technology in which only one carrier is used for transmission in a fixed frequency band. Specifically, a transmitter may modulate a data stream that needs to be transmitted to a single carrier for sending.

2. Multi-carrier transmission: The multi-carrier transmission refers to a modulation technology in which a plurality of carriers are used for transmission in a fixed frequency band. Specifically, the transmitter may divide a channel into several orthogonal sub-channels, that is, convert, based on a plurality of carrier signals, a data signal that needs to be transmitted into parallel low-speed sub-data streams, and then modulate the sub-data streams to each sub-channel for transmission.

The OFDM technology is a type of multi-carrier modulation, implements parallel data transmission through frequency division multiplexing, has a good anti-multipath fading capability, and can support multi-user access.

3. Peak-to-average power ratio PAPR: The PAPR is also referred to as a peak-to-average power ratio, is a ratio of a peak value of a signal to an average value of the signal, and is an indicator used to describe an amplitude of a signal waveform. When a PAPR of a signal is high, it indicates that there is large peak power in the signal. This increases a dynamic range of a system, and may cause large non-linear distortion and an efficiency loss of a power amplifier.

4. DMRS: The DMRS is used by a receiver to estimate an equivalent channel matrix corresponding to a data channel (for example, a physical downlink shared channel or a physical uplink shared channel) or a control channel (for example, a physical downlink control channel), to detect and demodulate data. The physical downlink shared channel (Physical downlink shared channel, PDSCH) is used as an example. For example, the DMRS uses a same precoding matrix as the PDSCH, to ensure that the DMRS and the PDSCH corresponding to a same equivalent channel. After receiving the DMRS and the PDSCH, the network device may perform equivalent channel estimation based on the DMRS, to demodulate data carried on the PDSCH.

5. Cyclic prefix (Cyclic Prefix, CP): The CP is formed by copying a signal at a tail of an OFDM symbol to a head, and may be used to eliminate inter-symbol interference. Specifically, for a segment of signal (or sequence) S whose length is N, for example, $S=[s\_1, s\_2, ..., s\_N]$, the last L elements (L refers to a length of a CP) of the sequence S are intercepted, that is, the sequence is $[s\_N-L, s\_N-L+1, ..., s\_N]$, and the truncated sequence whose length is L is added before the original sequence S. The sequence after the CP is added is $S\_CP=[s\_N-L, s\_N-L+1, ..., s\_N, s\_1, s\_2, ..., s\_N]$.

The following describes an implementation scenario of embodiments of this application with reference to the accompanying drawings.

A method provided in embodiments of this application may be applied to various communication systems, including but not limited to: a non-terrestrial network (Non-Terrestrial Network, NTN) communication system, a narrow band-Internet of Things (Narrow Band-Internet of Things, NB-IoT) system, a global system for mobile communications (Global System for Mobile Communications, GSM), an enhanced data rate for GSM evolution system (Enhanced Data rate for GSM Evolution, EDGE), a wideband code division multiple access (Wideband Code Division Multiple Access, WCDMA) system, a code division multiple access (Code Division Multiple Access, CDMA2000) 2000 system, a time division-synchronous code division multiple access (Time Division-Synchronization Code Division Multiple Access, TD-SCDMA) system, a long term evolution (Long Term Evolution, LTE) system, a 5G mobile communication system, and the three major application scenarios of a next-generation system, for example, a 6G mobile communication system, that is, enhanced mobile broadband (Enhanced Mobile Broadband, eMBB), ultra-reliable low-latency communications (Ultra-Reliable Low-Latency Communications, URLLC), and enhanced machine-type communication (Enhanced Machine-Type Communication, eMTC).

The following describes a communication scenario of embodiments of this application only by using communication systems shown in FIG. 2 to FIG. 5.

FIG. 2 is a diagram of an architecture of a communication system according to an embodiment of this application.

In FIG. 2, the communication system may include at least one network device and/or at least one terminal device. For example, the communication system may include a network device 101 and a network device 102, or the communication system includes a network device 101 and a terminal device 103, or the communication system may include a terminal device 104 and a terminal device 105.

In FIG. 2, the network device may provide a wireless access service for the terminal device. Specifically, each network device corresponds to one service coverage area. A terminal device that enters the area may communicate with the network device via a Uu interface, to receive a wireless access service provided by the network device. The terminal device and the network device may communicate with each other through a Uu interface link. Uu interface links may be classified into an uplink (uplink, UL) and a downlink (downlink, DL) based on directions of data transmission on the Uu interface links. Data sent from the terminal device to the network device may be transmitted on the UL, and data transmitted from the network device to the terminal device may be transmitted on the DL. For example, in FIG. 2, the terminal device 103 is located in a coverage area of the network device 101, the network device 101 may send data to the terminal device 103 through the DL, and the terminal device 103 may send data to the network device 101 through the UL.

The terminal device and another terminal device may communicate with each other through a direct communication link. The direct communication link may be referred to as a side link or a sidelink (sidelink, SL). For example, the direct communication link is a sidelink. In FIG. 2, the terminal device 103 and the terminal device 104 may communicate with each other through the sidelink. In FIG. 2, the terminal device 104 and the terminal device 105 may communicate with each other through the sidelink.

The network device in FIG. 2, for example, the network device 101 or the network device 102, may be a transmission reception point (transmission reception point, TRP), a base station, a relay station, an access point, or the like. The network device 101 or 102 may be a network device in a 5G communication system or a network device in a future evolved network, or may be a base transceiver station (base transceiver station, BTS) in a global system for mobile communications (global system for mobile communications, GSM) or code division multiple access (code division multiple access, CDMA) network, or may be an NB (NodeB) in wideband code division multiple access (wideband code division multiple access, WCDMA), or may be an eNB or an eNodeB (evolved NodeB) in long term evolution (long term evolution, LTE). The network device 101 or the network device 102 may alternatively be a radio controller in a cloud radio access network (cloud radio access network, CRAN) scenario.

The terminal device in FIG. 2, for example, the terminal device 103, the terminal device 104, or the terminal device 105, may be a device that has a wireless transceiver function and can provide communication services for users. Specifically, the terminal device 103, the terminal device 104, or the terminal device 105 may be a device in a V2X system, a device in a D2D system, a device in a machine type communication (machine type communication, MTC) system, or the like. For example, the terminal device 103, the terminal device 104, the terminal device 105, or a terminal device 106 may refer to an industrial robot, an industrial automation device, user equipment (user equipment, UE), an access terminal, a subscriber unit, a subscriber station, a mobile station, a remote station, a remote terminal, a mobile device, a user terminal, a terminal, a wireless terminal device, a user agent, or a user apparatus. For example, the terminal device 103, the terminal device 104, the terminal device 105, or the terminal device 106 may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, or another processing device connected to a wireless modem, a vehicle-mounted device, a wearable device, a terminal device in a 5G network or a network after 5G, or a terminal device in a future evolved network. This is not limited in this application. The terminal device in this application may alternatively be a vehicle-mounted module, a vehicle-mounted assembly, a vehicle-mounted component, a vehicle-mounted chip, or a vehicle-mounted unit that is disposed in a vehicle as one or more components or units. The vehicle may implement a method in this application via the vehicle-mounted module, the vehicle-mounted assembly, the vehicle-mounted component, the vehicle-mounted chip, or the vehicle-mounted unit that is disposed in the vehicle.

In an implementation, the network device may be an air network device in an NTN communication system, or may be a non-terrestrial base station or a non-terrestrial device, for example, an unmanned aerial vehicle, a hot-air balloon, a low Earth orbit satellite, a medium Earth orbit satellite, a high Earth orbit satellite. The method provided in embodiments of this application may be applied to a communication system shown in FIG. 3. The communication system may include an air network device, for example, a satellite. The communication system may further include at least one terminal device such as a terminal device shown in FIG. 3.

The satellite may operate either in a transparent mode or a regenerative mode. When the satellite operates in the transparent mode, the satellite may serve as a relay forwarding device to forward a signal of a network device or a terminal device, and may be used for performing enhanced processing on terrestrial network coverage. The satellite may have functions of radio frequency filtering, frequency conversion, and amplification. Transparent forwarding may be performed between a terminal device and a base station through a transparent satellite.

When the satellite operates in the regenerative mode, the satellite has a signal processing capability. It may be understood that the satellite has a processing function of a base station, and can send a signal to another network device or a terminal device, so as to provide a communication service for the terminal device.

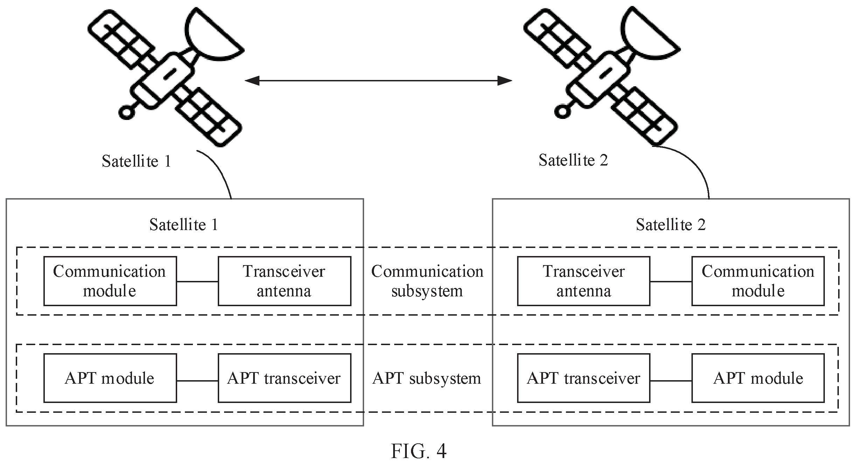

In addition, the method provided in embodiments of this application may be applied to an inter-satellite link (Inter-Satellite Link, ISL) communication system between satellites shown in FIG. 4. The communication system may include a satellite 1 and a satellite 2, and the satellite 1 and the satellite 2 communicate with each other through the inter-satellite link. The satellite includes two parts: an acquisition, pointing and tracking (Acquisition, Pointing and Tracking, APT) subsystem and a communication subsystem, as shown in FIG. 4.

The communication subsystem is responsible for inter-satellite information transmission, and is a main body of the inter-satellite communication system. The APT subsystem is responsible for acquisition, pointing, and tracking between the satellites. Acquisition refers to determining a direction of arrival of an incident signal, pointing refers to adjusting a transmission wave toward a receiving direction, and tracking refers to continuously adjusting pointing and acquisition throughout a communication process. To reduce the impact of attenuation and interference on a channel as much as possible and ensure high confidentiality and transmission rate, the APT can be adjusted in real time to continuously adapt to changes. An existing APT subsystem and an existing communication subsystem are independent systems. The APT subsystem may be an optical system, optical alignment is difficult, and pointing needs to be mechanically adjusted. The communication subsystem may be an optical communication system or a system operating in a microwave frequency band, mostly using a single high-gain antenna.

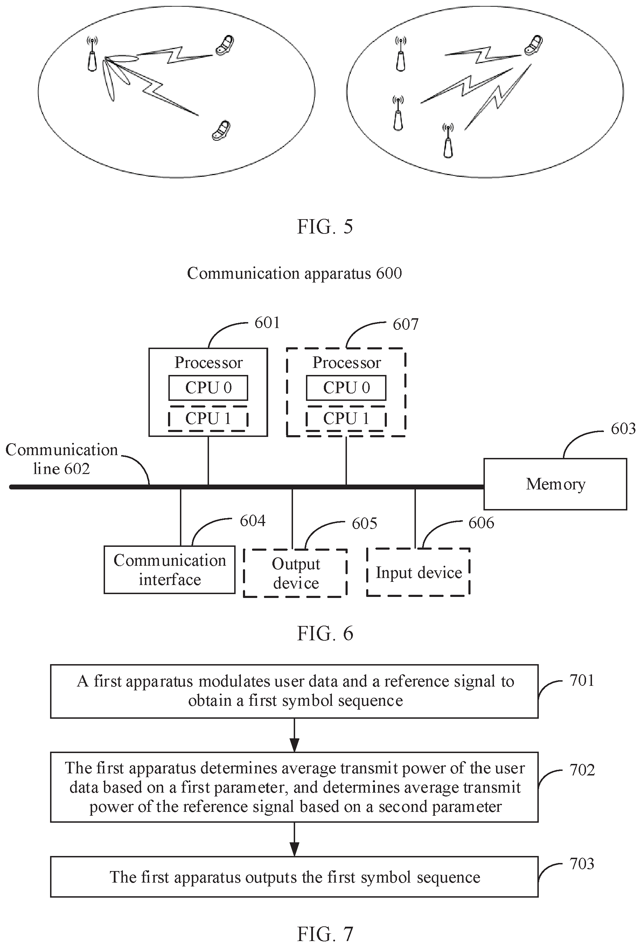

In addition, the method provided in this embodiment of this application may be further applied to a wireless communication system, for example, wireless local area network communication. As shown in FIG. 5, the communication system may include one access point serving a plurality of terminal devices, and include one terminal device communicating with a plurality of access points.

It should be noted that the communication systems shown in FIG. 2 to FIG. 5 are merely used as examples, and are not intended to limit the technical solutions of this application. A person skilled in the art should understand that in a specific implementation process, the communication system may further include another device, and further, a quantity of network devices and a quantity of terminal devices may be determined based on a specific requirement. In addition, the network elements in the drawings may further be connected via other interfaces. This is not limited.

Optionally, the network elements in the drawings of embodiments of this application, such as the network device or the terminal device, may be one functional module in one apparatus. It may be understood that the functional module may be an element in a hardware device, for example, a communication chip or a communication component in a terminal device or a network device, or may be a software functional module running on hardware, or a virtualized function instantiated on a platform (such as a cloud platform).

For example, the network elements in FIG. 2 to FIG. 5 may be implemented through a communication apparatus 600 in FIG. 6. FIG. 6 is a diagram of a hardware structure of a communication apparatus to which embodiments of this application are applicable. The communication apparatus 600 may include at least one processor 601, a communication line 602, a memory 603, and at least one communication interface 604.

The processor 601 may be one general-purpose central processing unit (central processing unit, CPU), microprocessor, or application-specific integrated circuit (application-specific integrated circuit, ASIC), or one or more integrated circuits configured to control execution of programs for implementing the solutions of this application.

The communication line 602 may include a path, such as a bus, for transferring information between the foregoing components.

The communication interface 604 is configured to communicate with another device or a communication network through any apparatus like a transceiver, and is, for example, an Ethernet interface, a radio access network (radio access network, RAN) interface, or a wireless local area network (wireless local area network, WLAN) interface.

The memory 603 may be a read-only memory (read-only memory, ROM) or another type of static storage device that can store static information and instructions, or a random access memory (random access memory, RAM) or another type of dynamic storage device that can store information and instructions. The memory 603 may alternatively be an electrically erasable programmable read-only memory (electrically erasable programmable read-only memory, EEPROM), a compact disc read-only memory (compact disc read-only memory, CD-ROM) or another compact disc storage, an optical disc storage (which includes a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer, but is not limited thereto. The memory may exist independently, and is connected to the processor through the communication line 602. The memory may alternatively be integrated with the processor. The memory provided in embodiments of this application may be usually non-volatile. The memory 603 is configured to store computer-executable instructions for performing the solutions of this application, and the processor 601 controls execution. The processor 601 is configured to execute the computer-executable instructions stored in the memory 603, to implement the method provided in embodiments of this application.

Optionally, the computer-executable instructions in this embodiment of this application may also be referred to as application program code. This is not specifically limited in embodiments of this application.

In specific implementation, as an embodiment, the processor 601 may include one or more CPUs, such as a CPU 0 and a CPU 1 in FIG. 2.

In specific implementation, as an embodiment, the communication apparatus 600 may include a plurality of processors, such as the processor 601 and a processor 607 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, a projector (projector), or the like. The input device 606 communicates with the processor 601, and may receive an input of a user in a plurality of manners. For example, the input device 606 may be a mouse, a keyboard, a touchscreen device, or a sensor device.

In specific implementation, the communication apparatus 600 may be a desktop computer, a portable computer, a network server, a personal digital assistant (personal digital assistant, PDA), a mobile phone, a tablet computer, a wireless terminal device, an embedded device, or a device having a structure similar to that in FIG. 6. A type of the communication apparatus 600 is not limited in embodiments of this application.

This application provides a communication method. Corresponding power adjustment coefficients are separately configured for transmit power of a reference signal and transmit power of user data, to adjust the transmit power of the reference signal and the transmit power of the user data. For example, the transmit power of the user data may be appropriately reduced by configuring a power adjustment coefficient, and the transmit power of the reference signal may be appropriately increased by configuring a power adjustment coefficient, so that an overall PAPR of a transmitted signal can be reduced. For example, on the premise that the total transmit power remains unchanged, the transmitter may set average transmit power of the user data and average transmit power of the reference signal based on the configured power adjustment coefficient, so that the overall PAPR of the transmitted signal is significantly reduced compared with that before the power allocation adjustment, thereby achieving a gain.

As shown in FIG. 7, the communication method is applied to a first apparatus and a second apparatus. The first apparatus serves as a signal transmitter, and the second apparatus serves as a receiver. The first apparatus and the second apparatus may be specifically network elements in the communication systems shown in FIG. 2 to FIG. 5. This is not limited in this application. As shown in FIG. 7, the method may include the following steps.

701: A first apparatus modulates user data and a reference signal to obtain a first symbol sequence.

The first symbol sequence includes a first sequence corresponding to the user data and a second sequence corresponding to the reference signal.

Specifically, the first apparatus may separately modulate the user data and the reference signal. For example, the first apparatus may perform coding and modulation on the user data based on a modulation scheme of the user data, to obtain a symbol sequence corresponding to the user data, that is, the first sequence. For example, the first apparatus may modulate the user data by using a modulation scheme, for example, 16-QAM or 64-QAM. This is not specifically limited in this application.

Correspondingly, the first apparatus may modulate the reference signal based on a generation manner of the reference signal, to obtain a symbol sequence corresponding to the reference signal, that is, the second sequence. For example, the first apparatus may modulate the reference signal by using a modulation scheme, for example, a BPSK sequence or a ZC sequence. This is not specifically limited in this application.

702: The first apparatus determines average transmit power of the user data based on a first parameter, and determines average transmit power of the reference signal based on a second parameter.

The first parameter indicates a power adjustment coefficient corresponding to the user data, and the second parameter indicates a power adjustment coefficient corresponding to the reference signal. In other words, the first parameter and the second parameter in this application are respectively used by the transmitter to perform power adjustment on the user data and the reference signal in a transmitted signal. In this embodiment of this application, the first apparatus may adjust the average transmit power of the user data based on the first parameter, for example, reduce or increase the average transmit power of the user data based on the first parameter. Correspondingly, the first apparatus may adjust the average transmit power of the reference signal based on the second parameter, for example, reduce or increase the average transmit power of the user data based on the second parameter.

It should be noted that, in some transmission scenarios, a PAPR of the user data part is higher than a PAPR of the reference signal part in one transmission periodicity. To reduce an overall PAPR of the transmission periodicity, the first apparatus may usually reduce the transmit power of the user data based on the first parameter and the second parameter, for example, the first parameter is less than or equal to 1; or the first apparatus may increase the transmit power of the reference signal, for example, the second parameter is greater than or equal to 1. However, in a specific scenario, based on the first parameter and the second parameter, the first apparatus may increase the transmit power of the user data, reduce the transmit power of the reference signal, or perform another adjustment. This is not specifically limited in this application.

In addition, it should be noted that a type of the reference signal is not specifically limited in embodiments of this application. For example, the reference signal may be a DMRS. In the following embodiments, only an example in which the reference signal is the DMRS is used.

In an implementation, the first parameter may be a preset value, or the second parameter is a preset value, or both the first parameter and the second parameter are preset values.

For example, in a transmission scenario, if the preset value of the first parameter is 0.8, the preset value of the second parameter is 1.8, a symbol sequence obtained after the user data is modulated is X, and a symbol sequence obtained after the reference signal like the DMRS is modulated is Y, the first apparatus may determine, based on the value of the first parameter and the value of the second parameter, that a final transmit sequence of the user data may be $\sqrt{\alpha}*X$; and similarly, determine a final transmit sequence of the DMRS may be $\sqrt{\beta}*Y$. In still another example, if the preset value of the first parameter is 1, it indicates that the average transmit power of the user data is not adjusted, that is, an original transmit power is used; or if the preset value of $\beta$ is 1, it indicates that the average transmit power of the reference signal is not adjusted.

In a possible implementation, the first apparatus may be configured with one or more groups of first parameters and/or second parameters, for example, may be configured with a plurality of groups of parameters, that is, may be configured in a form of an index table (or referred to as a configuration table), as shown in the following tables. When transmitting a signal, the first apparatus may determine a specific value of the first parameter and/or a specific value of the second parameter from the index table based on a higher layer indication or autonomous selection.

In a possible implementation, that the first parameter and/or the second parameter are/is the preset value may specifically include: The value of the first parameter corresponds to a modulation and coding scheme (Modulation and Coding Scheme, MCS) and/or the value of the second parameter corresponds to a modulation and coding scheme (Modulation and Coding Scheme, MCS). For example, in an implementation of the MCS index value, each MCS index value corresponds to parameters such as a modulation scheme and a physical transmission rate. In addition, in this embodiment of this application, each MCS index value may alternatively correspond to one first parameter, one second parameter, or one group of parameters and one second parameter.

In addition, in a possible implementation, that the first parameter and/or the second parameter are/is the preset value may specifically include: The first parameter corresponds to a generation manner of the reference signal and/or the second parameter corresponds to a generation manner of the reference signal. In other words, for different generation manners of the reference signal, at least one corresponding group of first parameters and/or at least one corresponding group of second parameters may be configured. An example is shown in the following Table 1.

Table 1 Configuration of the power adjustment coefficient

| Reference signal sequence | First parameter | Second parameter |
|---|---|---|
| ZC sequence | 0.8 | 1.6 |
| M sequence | 0.9 | 1.3 |
| Pi/2 BPSK | 0.5 | 2.5 |

It should be noted that, in the example in Table 1, a modulation scheme of the user data in the transmission mode is not specifically limited. For example, the modulation scheme of the user data may be quadrature phase shift keying (Quadrature Phase Shift Keying, QPSK). Another modulation scheme of the user data may correspond to configuration tables of different power adjustment coefficients. Details are not described in this application.

In addition, in a possible implementation, that the first parameter and/or the second parameter are/is the preset value may specifically include: The first parameter corresponds to a modulation scheme of the user data and/or the second parameter corresponds to a modulation scheme of the user data. In other words, for different modulation schemes of the user data, at least one corresponding group of first parameters and/or at least one corresponding group of second parameters may be configured. An example is shown in the following Table 2.

Table 2 Configuration of the power adjustment coefficient

| Modulation scheme of the user data | First parameter | Second parameter |
|---|---|---|
| Pi/2 BPSK | 1 | 1 |
| QPSK | 0.8 | 1.6 |
| 16-QAM | 0.77 | 1.69 |

(continued)

| Modulation scheme of the user data | First parameter | Second parameter |
|---|---|---|
| 64-QAM | 0.75 | 1.75 |

In the example in Table 2, the generation manner of the reference signal in the transmission mode is not specifically limited. For example, the generation manner of the reference signal may be a ZC sequence. For example, if the generation manner of the reference signal is the M sequence, a possible corresponding configuration table of different power adjustment coefficients, for example, may be shown in Table 3. For example, if the generation manner of the reference signal is Pi/2 BPSK, a possible corresponding configuration table of the power adjustment coefficient may be shown in Table 4.

Table 3 Configuration of the power adjustment coefficient

| Modulation scheme of the user data | First parameter | Second parameter |
|---|---|---|
| Pi/2 BPSK | 1 | 1 |
| QPSK | 0.9 | 1.3 |
| 16-QAM | 0.85 | 1.45 |
| 64-QAM | 0.82 | 1.54 |

Table 4 Configuration of the power adjustment coefficient

| Modulation scheme of the user data | First parameter | Second parameter |
|---|---|---|
| Pi/2 BPSK | 1 | 1 |
| QPSK | 0.5 | 2.5 |
| 16-QAM | 0.48 | 2.56 |
| 64-QAM | 0.45 | 2.65 |

In addition, in a possible implementation, that the first parameter and/or the second parameter are/is the preset value may specifically include: The first parameter and/or the second parameter may correspond to a generation manner of the reference signal and a modulation scheme of the user data. In other words, for different generation manners of the reference signal and different modulation schemes of the user data, at least one corresponding group of first parameters and/or at least one corresponding group of second parameters may be separately configured. An example is shown in the following Table 5.

Table 5 Configuration of the power adjustment coefficient

| Reference signal sequence | Modulation scheme of the user data | First parameter | Second parameter |
|---|---|---|---|
| ZC sequence | Pi/2 BPSK | 1 | 1 |
| | QPSK | 0.8 | 1.6 |
| | 16-QAM | 0.77 | 1.69 |
| | 64-QAM | 0.75 | 1.75 |
| M sequence | Pi/2 BPSK | 1 | 1 |
| | QPSK | 0.9 | 1.3 |
| | 16-QAM | 0.85 | 1.45 |
| | 64-QAM | 0.82 | 1.54 |
| Pi/2 BPSK | Pi/2 BPSK | 1 | 1 |
| | QPSK | 0.5 | 2.5 |
| | 16-QAM | 0.48 | 2.56 |
| | 64-QAM | 0.45 | 2.65 |

(continued)

| Reference signal sequence | Modulation scheme of the user data | First parameter | Second parameter |
|---|---|---|---|
| ... | ... | ... | ... |

Alternatively, in another implementation, a relationship between the first parameter and the second parameter may be determined based on at least one of the following information: a quantity of resource elements corresponding to the first sequence, a quantity of resource elements corresponding to the second sequence, or a first indicator. The first indicator indicates a resource occupation status corresponding to the first sequence, a resource occupation status corresponding to the second sequence, or a resource occupation status corresponding to each of the first sequence and the second sequence. In other words, the first apparatus may determine a specific value of the parameter based on an association relationship between the first parameter and the second parameter. For example, the first apparatus may first determine a specific value of the first parameter, and then determine a specific value of the second parameter based on the association relationship between the first parameter and the second parameter.

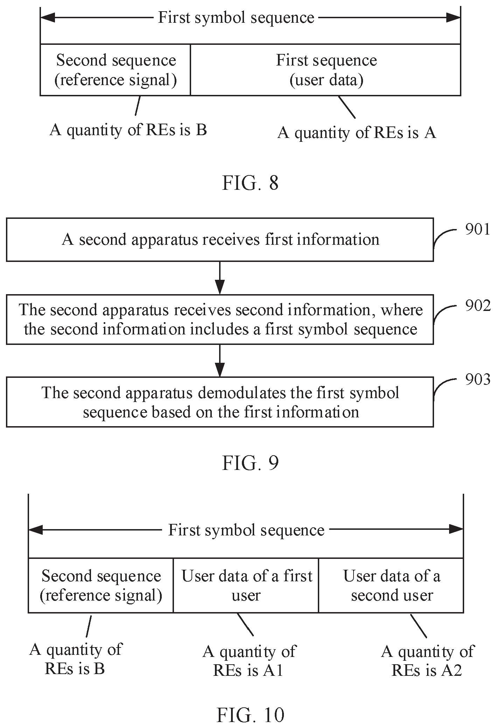

For example, as shown in FIG. 8, a symbol sequence obtained after the first apparatus performs modulation processing on the user data and the reference signal is a first symbol sequence. A symbol sequence corresponding to the user data in the first symbol sequence is a first sequence, and a quantity of resource elements (Resource Element, RE) occupied by the first sequence may be indicated by A. A symbol sequence corresponding to the reference signal in the first symbol sequence may be a second sequence, and a quantity of REs occupied by the second sequence may be indicated by B.

Based on this example, it may be learned that overall transmit power of the symbol sequence before power adjustment may be indicated by (A+B)*P, where P is average transmit power corresponding to each RE. For ease of calculation, in this embodiment of this application, a difference between transmit power on different REs is ignored, that is, each RE corresponds to same average transmit power P by default. In this case, after the first apparatus performs power adjustment based on the first parameter $\alpha$ and the second parameter $\beta$, the overall transmit power may be indicated by $(\alpha*A+\beta*B)*P$. The overall transmit power of the transmitted signal remains unchanged, that is, $(\alpha*A+\beta*B)*P=(A+B)*P$, which is equivalent to: $\alpha*A+\beta*B=A+B$.

Therefore, it may be learned that the association relationship that the first parameter $\alpha$ and the second parameter $\beta$ satisfy may be: $\alpha*A+\beta*B=A+B$. A value of $\beta$ may be obtained according to the foregoing formula, that is,

$$\beta = \frac{A+B-\alpha*A}{B} = 1+(1-\alpha)\frac{A}{B}.$$

In other words, the first apparatus may obtain the value of the second parameter $\beta$ through calculation based on the value of the first parameter $\alpha$ and the association relationship between the first parameter $\alpha$ and the second parameter $\beta$. Specifically, the first apparatus may obtain the value of the second parameter based on the quantity A of resource elements corresponding to the first sequence, the quantity B of resource elements corresponding to the second sequence, and a value of the first parameter. Alternatively, the first apparatus may obtain the value of the second parameter based on a ratio of the quantity A of resource elements corresponding to the first sequence to the quantity B of resource elements corresponding to the second sequence, that is, a data-to-reference signal resource ratio, and the value of the first parameter.

For example, the first apparatus determines that the first parameter $\alpha$ is 0.8, and A/B=3. In this case, the second parameter $\beta$ obtained through calculation according to the foregoing formula is 1.6.

In an implementation, the first indicator may include at least one of the following information: the data-to-reference signal resource ratio, the reference signal resource overhead, and data transmission efficiency. The data-to-reference signal resource ratio indicates a ratio of the quantity of resource elements corresponding to the first sequence to the quantity of resource elements corresponding to the second sequence. The reference signal resource overhead indicates a ratio of the quantity of resource elements corresponding to the second sequence to a quantity of resource elements corresponding to the first symbol sequence. The data transmission efficiency indicates a ratio of a quantity of resources occupied by the first sequence in the first symbol sequence to a total quantity of resources occupied by the first symbol sequence. For example, as shown in FIG. 8, a data reference signal resource P=A/B, a reference signal resource overhead S=B/(A+B), and data transmission efficiency J=A/(A+B).

Optionally, the association relationship that the first parameter $\alpha$ and the second parameter $\beta$ satisfy may alternatively be: $\beta=1+(1-\alpha)*P$, where P indicates the data-to-reference signal resource ratio, and P=A/B.

Alternatively, the association relationship that the first parameter $\alpha$ and the second parameter $\beta$ satisfy may be $\beta=1+(1-\alpha)*(1/S-1)$, where S indicates the reference signal overhead.

Alternatively, the association relationship that the first parameter $\alpha$ and the second parameter $\beta$ satisfy may be $\beta=1+(1-\alpha)*J/(1-J)$, where J indicates the data transmission efficiency.

In other words, the first apparatus may determine the value of $\alpha$ or $\beta$ based on the association relationship between the parameters. A method for determining the first parameter and the second parameter is not specifically limited in embodiments of this application.

For example, if P=4:1=4, power adjustment coefficients for the user data and the reference signal may be different in different reference signal sequences or different modulation schemes of the user data. For example, the first parameter and the second parameter may be configured to values shown in the following Table 1.

Table 6 Reference signal-ZC sequence

| Modulation scheme of the user data | First parameter | Second parameter |
|---|---|---|
| Pi/2 BPSK | 1 | 1 |
| QPSK | 0.85 | 1.6 |
| 16-QAM | 0.8 | 1.8 |
| 64-QAM | 0.78 | 1.88 |

Table 7 Reference signal-M sequence

| Modulation scheme of the user data | First parameter | Second parameter |
|---|---|---|
| Pi/2 BPSK | 1 | 1 |
| QPSK | 0.92 | 1.32 |
| 16-QAM | 0.88 | 1.48 |
| 64-QAM | 0.85 | 1.6 |

Table 8 Reference signal-Pi/2 BPSK

| Modulation scheme of the user data | First parameter | Second parameter |
|---|---|---|
| Pi/2 BPSK | 1 | 1 |
| QPSK | 0.55 | 2.8 |
| 16-QAM | 0.5 | 3 |
| 64-QAM | 0.48 | 3.08 |

In a possible implementation, the first apparatus may be configured with a power adjustment coefficient shown in the following Table 9.

Table 9 Configuration of the power adjustment coefficient

| Parameter index value | Reference signal sequence | Modulation scheme of the user data | Data-to-reference signal resource ratio | First parameter | Second parameter |
|---|---|---|---|---|---|
| 0 | ZC sequence | Pi/2 BPSK | 3 | 1 | 1 |
| 1 | | QPSK | 3 | 0.8 | 1.6 |
| 2 | | 16-QAM | 3 | 0.77 | 1.69 |
| 3 | | 64-QAM | 3 | 0.75 | 1.75 |
| 4 | M sequence | Pi/2 BPSK | 3 | 1 | 1 |
| 5 | | QPSK | 3 | 0.9 | 1.3 |
| 6 | | 16-QAM | 3 | 0.85 | 1.45 |
| 7 | | 64-QAM | 3 | 0.82 | 1.54 |

(continued)

| Parameter index value | Reference signal sequence | Modulation scheme of the user data | Data-to-reference signal resource ratio | First parameter | Second parameter |
|---|---|---|---|---|---|
| 8 | Pi/2 BPSK | Pi/2 BPSK | 3 | 1 | 1 |
| 9 | | QPSK | 3 | 0.5 | 2.5 |
| 10 | | 16-QAM | 3 | 0.48 | 2.56 |
| 11 | | 64-QAM | 3 | 0.45 | 2.65 |
| 12 | ZC sequence | Pi/2 BPSK | 4 | 1 | 1 |
| 13 | | QPSK | 4 | 0.85 | 1.6 |
| 14 | | 16-QAM | 4 | 0.8 | 1.8 |
| 15 | | 64-QAM | 4 | 0.78 | 1.88 |
| 16 | M sequence | Pi/2 BPSK | 4 | 1 | 1 |
| 17 | | QPSK | 4 | 0.92 | 1.32 |
| 18 | | 16-QAM | 4 | 0.88 | 1.48 |
| 19 | | 64-QAM | 4 | 0.85 | 1.6 |
| 20 | Pi/2 BPSK | Pi/2 BPSK | 4 | 1 | 1 |
| 21 | | QPSK | 4 | 0.55 | 2.8 |
| 22 | | 16-QAM | 4 | 0.5 | 3 |
| 23 | | 64-QAM | 4 | 0.48 | 3.08 |
| ... | ... | ... | ... | ... | ... |

It should be noted that the configuration table of the power adjustment coefficient in this embodiment of this application is shown as a possible example. The configuration table may include more or fewer elements than those in the foregoing example, and the specific value of the first parameter or the second parameter may not be limited to the foregoing example. Details are not described in this application.

In an implementation, in this application, power adjustment is performed on the transmitted data to reduce the PAPR. In this way, whether the PAPR is reduced after the transmit power is adjusted may be further determined. Therefore, the first parameter and the second parameter need to meet the following condition: A ratio of maximum transmit power to average transmit power of the first symbol sequence is less than or equal to a first threshold. The ratio of the maximum transmit power to the average transmit power is a peak-to-average power ratio.

Alternatively, optionally, the first parameter and the second parameter need to meet the following condition: a maximum amplitude value for transmitting the first symbol sequence is less than or equal to a second threshold. Alternatively, the first parameter and the second parameter meet both the foregoing two conditions.

The first threshold or the second threshold may be a preset PAPR-related threshold, and is a threshold indicating PAPR performance. For example, the first threshold is a maximum PAPR threshold, and the second threshold is a maximum amplitude value threshold.

703: The first apparatus outputs the first symbol sequence.

In an actual transmission system, after determining the average transmit power of the user data based on the first parameter, and determining the average transmit power of the reference signal based on the second parameter, the first apparatus outputs the first symbol sequence. Then, the first apparatus may perform resource mapping on the first symbol sequence, and send the first symbol sequence to the second apparatus.

In the foregoing embodiment of this application, the transmit power of the user data and the transmit power of the reference signal that are included in one transmission periodicity are adjusted by configuring power adjustment coefficients. On the basis that the overall transmit power remains unchanged, the transmit power of the reference signal can be increased and the transmit power of the user data can be reduced, thereby reducing an overall PAPR in the transmission periodicity, and improving transmission performance.

Further, in the foregoing possible implementation, the determined power adjustment coefficient needs to meet a condition related to a peak-to-average power ratio, that is, after power adjustment is performed on the first symbol sequence, a corresponding peak-to-average power ratio or amplitude value does not exceed the preset threshold (the first threshold or the second threshold). If the foregoing condition is not met, the first apparatus may reset the power adjustment coefficient, to reduce an overall peak-to-average power ratio of a transmission signal and improve transmission performance.

In an implementation, the foregoing transmission manner may be further applied to a multi-user data scenario, that is, the user data includes user data corresponding to two or more users. The following describes an implementation of this application by using only an example in which the first symbol sequence includes data corresponding to two users.

If the user data includes data corresponding to a first user and data corresponding to a second user, the first parameter includes $\alpha 1$ and $\alpha 2$, where $\alpha 1$ indicates a power adjustment coefficient corresponding to the user data of the first user, $\alpha 2$ indicates a power adjustment coefficient corresponding to the user data of the second user.

For example, as shown in FIG. 10, the first symbol sequence includes the first sequence and the second sequence, and the first sequence includes the user data of the first user and the user data of the second user. A1 indicates a quantity of REs occupied by a symbol sequence corresponding to the user data of the first user in the first sequence, A2 indicates a quantity of REs occupied by a symbol sequence of the user data corresponding to the second user in the first sequence, and B indicates a quantity of REs occupied by the second sequence. In this case, $\alpha 1$, $\alpha 2$, and the second parameter $\beta$ meet the following condition:

$$\alpha 1 * A1 + \alpha 2 * A2 + \beta * B = A1 + A2 + B.$$

Therefore, it may be learned that the second parameter $\beta$ satisfies $\beta = (1-\alpha 1)*A1/B + (1-\alpha 2)*A2/B + 1$.

In a multi-user data transmission scenario, the first apparatus may first determine $\alpha 1$ and $\alpha 2$ in the first parameter, and then determine the value of the second parameter $\beta$ based on the values of $\alpha 1$ and $\alpha 2$ according to the foregoing formula.

In the foregoing possible implementation, the implementation solution of this application is applied to a multi-user scenario, and an association relationship between a plurality of power adjustment parameters may be obtained. In this case, a specific value of the power adjustment parameter may be set based on the association relationship, to reduce a peak-to-average power ratio and improve transmission performance.

Optionally, in an implementation, if a modulation order of the user data corresponding to the first user is higher than a modulation order of the user data corresponding to the second user, the first apparatus may first determine $\alpha 1$, and then determine $\alpha 2$. In other words, the first apparatus may take high-order modulated user data as a leading role, first adjust transmit power of higher-order modulated user data, then adjust the transmit power of user data with a lower modulation order, and finally adjust the transmit power of the reference signal with reference to overall transmit power.

For example, if a modulation scheme of the UE1 is 8-QAM, and a modulation order is 8; or a modulation scheme of the UE2 is QPSK and a modulation order is 4, the modulation order of the UE1 is higher than that of the UE2. Therefore, the first apparatus may first adjust a power allocation factor $\alpha 1$ of the user data corresponding to the UE1, and then adjust a power allocation factor $\alpha 2$ of the user data corresponding to the UE2, and then calculate $\beta$ based on values of $\alpha 1$ and $\alpha 2$, to adjust the transmit power of the reference signal.

Optionally, a power adjustment coefficient corresponding to user data with a higher modulation order may be less than or equal to a power adjustment coefficient corresponding to user data with a lower modulation order, for example, $\alpha 1 \leq \alpha 2$ in the foregoing example.

In the foregoing possible implementation, the implementation solution of this application is applied to a multi-user scenario, and a corresponding power adjustment coefficient may be configured based on a modulation order of user data. For example, user data with a higher modulation order corresponds to a smaller power adjustment coefficient, that is, transmit power is reduced to a higher degree, and effect of reducing an overall transmission peak-to-average power ratio is more significant, thereby improving transmission performance of the system.

In another implementation, if an MCS index value corresponding to the user data of the first user is higher than an MCS index value corresponding to the user data of the second user, the first apparatus may first determine $\alpha 1$, and then determine $\alpha 2$. For example, a higher MCS index value usually corresponds to a higher transmission code rate. In other words, the first apparatus may use user data with a higher MCS index value as a dominant part, first adjust transmit power of the user data with a higher MCS index value, then adjust transmit power of the user data with a lower MCS index value, and finally adjust the transmit power of the reference signal with reference to overall transmit power.

Further, optionally, a power adjustment coefficient corresponding to user data with a higher MCS index value may be less than or equal to a power adjustment coefficient corresponding to user data with a lower MCS index value, for example, $\alpha 1 \leq \alpha 2$ in the foregoing example.

In the foregoing possible implementation, the implementation solution of this application is applied to a multi-user scenario, and a corresponding power adjustment coefficient may be configured based on an MCS index value of user data. For example, user data with a higher MCS index value corresponds to a smaller power adjustment coefficient, that is, transmit power is reduced to a higher degree, and effect of reducing an overall transmission peak-to-average power ratio is more significant, thereby improving transmission performance of the system.

It should be noted that a quantity of users included in the user data part in the first symbol sequence is not limited in embodiments of this application, and a quantity of users corresponds to a quantity of parameters included in the first parameter. For example, in the foregoing embodiment, the first symbol sequence includes symbol sequences corresponding to user data of the first user and the second user, that is, the average transmit power of the symbol sequence corresponding to the user data of the first user and the symbol sequence corresponding to the second user may be adjusted based on the first parameters $\alpha1$ and $\alpha2$ respectively. Similarly, if the first symbol sequence includes symbol sequences corresponding to user data of three users, average transmit power of symbol sequences corresponding to the user data of the three users may be separately adjusted based on the first parameters $\alpha1$, $\alpha2$, and $\alpha3$. $\alpha1$ and $\alpha2$ may be equal or unequal, and $\alpha1$, $\alpha2$, and $\alpha3$ may be equal or unequal. This is not specifically limited in embodiments of this application.

Correspondingly, because the value of the second parameter is related to a channel estimation response of the reference signal, and the first parameter is related to demodulation and decoding of the user data, the receiver also needs to determine the value of the first parameter and the value of the second parameter, or the value of the first parameter and the value of the second parameter are determined based on an association relationship between the first parameter and the second parameter. The following briefly describes an execution process of the receiver.

An embodiment of this application further provides a communication method. As shown in FIG. 9, the communication method includes the following steps.

901: A second apparatus receives first information.

The first information may include at least one of the following information: a parameter index value, a first parameter, a second parameter, or an association relationship between the first parameter and the second parameter. The parameter index value indicates a preset value corresponding to the first parameter and/or a preset value corresponding to the second parameter. As shown in Table 9, one parameter index value indicates one row of parameters in Table 9. In other words, the second apparatus receives the first information, and the first information is used to determine the first parameter and the second parameter, that is, determine power adjustment coefficients for user data and a reference signal determined by a transmitter separately.

In an implementation, a first apparatus or another network element may send the first information to the second apparatus, to configure, for the second apparatus, the first parameter, the second parameter, or the first parameter and the second parameter specified for current data transmission.

Alternatively, a first apparatus or another network element may preconfigure configuration tables of the power adjustment coefficients shown in Table 1 to Table 9 for the second apparatus, and then indicate the parameter index value to the second apparatus based on the first information, so that the second apparatus can determine the corresponding first parameter and second parameter based on the parameter index value.

Alternatively, a first apparatus or another network element may preconfigure the association relationship between the first parameter and the second parameter for the second apparatus, for example, configure the formula in the foregoing example, and then indicate the first parameter to the second apparatus based on the first information, so that the second apparatus may obtain the second parameter through calculation based on the first parameter and according to the configured formula. On the contrary, the second parameter may be further indicated to the second apparatus based on the first information, and the second apparatus may obtain the first parameter through calculation based on the second parameter and according to the configured formula. This is not specifically limited in this application.

902: The second apparatus receives second information, where the second information includes a first symbol sequence.

Specifically, with reference to the embodiment shown in FIG. 7, the first apparatus may send the second information to the second apparatus, where the second information includes the first symbol sequence.

As described above, the first symbol sequence includes a first sequence corresponding to the user data and a second sequence corresponding to the reference signal.

903: The second apparatus demodulates the first symbol sequence based on the first information.

The second apparatus may perform channel estimation based on a symbol sequence of the reference signal in the first symbol sequence.

Specifically, the second apparatus may perform channel estimation based on the second parameter, obtain channel information of the user data part from channel estimation information, complete detection on a symbol sequence corresponding to the user data based on a channel estimation result and the first parameter, and demodulate the symbol sequence to obtain the user data.

Specifically, channel estimation may be performed on the reference signal based on the following channel transmission relationship.

A DMRS is used as an example, $y_{DMRS} = H * \sqrt{\beta} * x_{DMRS}$, where $y_{DMRS}$ indicates a matrix of a received reference signal, $x_{DMRS}$ indicates a matrix of a sent reference signal, and H indicates a channel estimation matrix.

For channel equalization, $x'_{Data} = x_{Data} + \frac{n}{H\sqrt{\alpha}}$, where $x'_{Data}$ indicates a matrix of received user data,

$x_{Data}$ indicates a matrix of sent user data, and n indicates channel noise.

It can be learned from the foregoing content that, after the transmitter adjusts average transmit power, a mean square error (Mean Square Error, MSE) of channel estimation is reduced by β times. For channel equalization, user data is adjusted by α times. After channel equalization, noise is amplified by 1/α times. Therefore, for an entire transmission link, a gain obtained after signal power is adjusted may be indicated by (β-1/α).

In addition, in the foregoing implementation, after determining the power adjustment coefficient, the transmitter may adjust an MCS index value based on the power adjustment gain, for example, adjust a related parameter like a target transmission code rate, to further improve transmission performance.

In a possible implementation, the first apparatus may adjust a first MCS index value to a second MCS index value based on the first parameter and the second parameter. A modulation order corresponding to the first MCS index value is the same as a modulation order corresponding to the second MCS index value.

Specifically, for example, if (β-1/α)>0, it may be considered that there is a gain after the signal power is adjusted, and transmission performance of the communication system is improved.

In an implementation, if (β-1/α)>0, it is considered that transmission performance deteriorates after the signal power is adjusted, and the first apparatus may reconfigure the values of the first parameter and the second parameter, to adjust transmit power of the user data and transmit power of the reference signal.

Optionally, if (β-1/α)>0, or in a multi-user transmission scenario, (β-1/α1-1/α2)>0, the first apparatus may increase the MCS index value, for example, modulate the first MCS index value to the second MCS index value, where the first MCS index value is less than the second MCS index value, and the modulation order corresponding to the first MCS index value is the same as the modulation order corresponding to the second MCS index value.

For example, as shown in Table 10, for a same modulation order, a larger MCS index value corresponds to a larger transmission code rate, which is equivalent to that the transmitter may appropriately increase the transmission code rate without changing a modulation scheme, to improve overall transmission performance.

Correspondingly, if (β-1/α)<0, or (β-1/α1-1/α2)<0, the first apparatus may decrease the MCS index value, for example, modulate the first MCS index value to the second MCS index value, the first MCS index value is greater than the second MCS index value, and the modulation order corresponding to the first MCS index value is the same as the modulation order corresponding to the second MCS index value. In other words, the transmitter may appropriately reduce a transmission code rate without changing a modulation scheme, to ensure transmission performance.

Table 10 MCS index table

| MCS index value | Modulation order | Code rate | Spectrum efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9194 |
| 14 | 4 | 553 | 2.1602 |
| 15 | 4 | 616 | 2.4063 |
| 16 | 4 | 658 | 2.5703 |

(continued)

| MCS index value | Modulation order | Code rate | Spectrum efficiency |
|---|---|---|---|
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | Reserved |
| 30 | 4 | Reserved | Reserved |
| 31 | 6 | Reserved | Reserved |

For example, if an initial MCS index value originally determined by the first apparatus is 4, and a corresponding modulation order is 2, and after power adjustment, $(\beta-1/\alpha)$ obtained through calculation is greater than 0, the first apparatus may increase the MCS index value to 5 or 6. To ensure that the modulation order remains unchanged and is still 2, the adjusted MCS index value cannot be greater than 9. On the contrary, if the initial MCS index value originally determined by the first apparatus is 13, when it is determined that $(\beta-1/\alpha)$ is less than 0, the first apparatus may decrease the MCS index value to 11. To ensure that the modulation order remains unchanged and is still 4, the adjusted MCS index value cannot be less than 10.

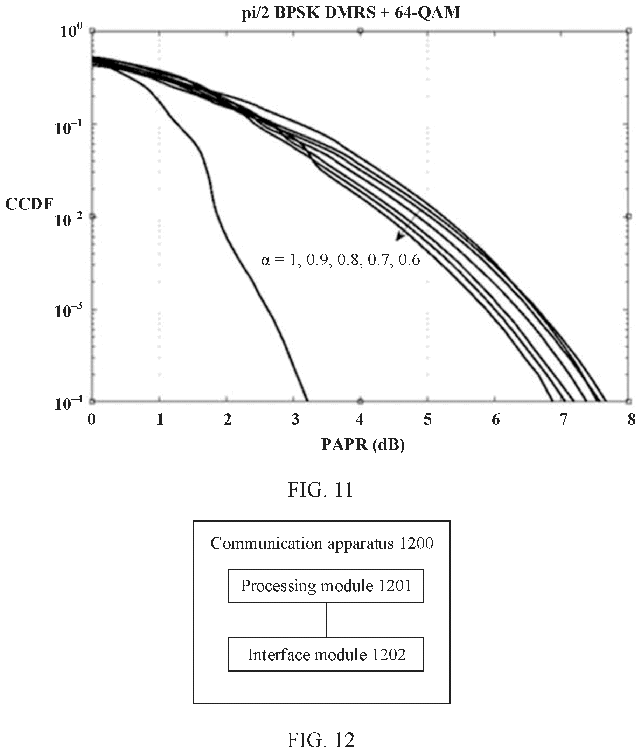

In the foregoing implementation, the transmit power of the user data and the transmit power of the reference signal that are included in one transmission periodicity are adjusted by configuring power adjustment coefficients, for example, the transmit power of the reference signal is increased, and the transmit power of the user data is reduced, thereby reducing an overall PAPR in the transmission periodicity, and improving transmission performance. As shown in FIG. 11, it can be learned that corresponding PAPR curves are obtained when the first parameter $\alpha$ is set to values such as 1, 0.9, 0.8, 0.7, and 0.6. After the transmitter adjusts the transmit power of the user data and the transmit power of the reference signal, PAPR curves move leftward. In other words, an overall PAPR of the communication system is reduced, and communication performance is significantly improved.

The possible implementations mentioned above in this application may be combined when the solutions are not contradictory. This is not limited in this application.

The foregoing mainly describes the solutions provided in this application from a perspective of interaction between the transmitter and the receiver. Correspondingly, this application further provides a communication apparatus. The communication apparatus may be the first apparatus in the foregoing method embodiments, or a component that can be used for the first apparatus; or the communication apparatus may be the second apparatus in the foregoing method embodiments, or a component that can be used for the second apparatus. It may be understood that, to implement the foregoing functions, the first apparatus or the second apparatus includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that the foregoing uses only the first apparatus and the second apparatus as an example to describe interaction between network elements. For example, the first apparatus may be a network device, and the second apparatus may be a terminal. Actually, processing performed by the terminal is not limited to being performed by only a single network element, and processing performed by the network device is not limited to being performed by only a single network element. For example, processing performed by the network device may be separately performed by at least one of a central unit (central unit, CU), a distributed unit (Distributed Unit, DU), and an RU.

In this application, the first apparatus and the second apparatus may be divided into functional modules based on the foregoing method examples. For example, functional modules corresponding to various functions are obtained through division, or two or more functions may be integrated into one processing module. The integrated module may be implemented in a form of hardware, or may be implemented in a form of a software functional module. It can be understood that division into the modules in this application is an example, and is merely logical function division. During actual implementation, another division manner may be used.

For example, when each functional module is obtained through division in an integrated manner, FIG. 12 is a diagram of a structure of a communication apparatus 1200. The communication apparatus 1200 includes a processing module 1201 and an interface module 1202.

For example, the communication apparatus 1200 may be configured to implement a function of the first apparatus in the foregoing embodiments.

The processing module 1201 is configured to modulate user data and a reference signal to obtain a first symbol sequence, where the first symbol sequence includes a first sequence corresponding to the user data and a second sequence corresponding to the reference signal.

The processing module 1201 is further configured to: determine average transmit power of the user data based on a first parameter, and determine average transmit power of the reference signal based on a second parameter. The first parameter indicates a power adjustment coefficient corresponding to the user data, the second parameter indicates a power adjustment coefficient corresponding to the reference signal, the first parameter and/or the second parameter are/is a preset value, or a relationship between the first parameter and the second parameter is determined based on at least one of the following information: a quantity of resource elements corresponding to the first sequence, a quantity of resource elements corresponding to the second sequence, or a first indicator, where the first indicator indicates a resource occupation status corresponding to the first sequence and/or a resource occupation status corresponding to the second sequence.

The interface module 1202 is configured to output the first symbol sequence.

In an implementation, that the first parameter and/or the second parameter are/is a preset value specifically includes: the first parameter corresponds to a modulation and coding scheme MCS and/or the second parameter corresponds to a modulation and coding scheme MCS; or the first parameter corresponds to a generation manner of the reference signal and/or the second parameter corresponds to a generation manner of the reference signal; or the first parameter corresponds to a modulation scheme of the user data and/or the second parameter corresponds to a modulation scheme of the user data; or the first parameter corresponds to a generation manner of the reference signal and a modulation scheme of the user data and/or the second parameter corresponds to a generation manner of the reference signal and a modulation scheme of the user data.

In an implementation, the first indicator includes at least one of the following information: a data-to-reference signal resource ratio, a reference signal resource overhead, and data transmission efficiency. The data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

In an implementation, the relationship between the first parameter $\alpha$ and the second parameter $\beta$ satisfies at least one of the following conditions: $\alpha*A+\beta*B=A+B$, where A indicates the quantity of resource elements corresponding to the first sequence, B indicates the quantity of resource elements corresponding to the second sequence, and both A and B are positive integers; or $\beta=1+(1-\alpha)*P$, where P indicates the data-to-reference signal resource ratio, and P=A/B; or $\beta=1+(1-\alpha)*(1/S-1)$, where S indicates the reference signal overhead, or $\beta=1+(1-\alpha)*J/(1-J)$, where J indicates the data transmission rate; or the like.

In an implementation, if the user data includes user data of a first user and user data of a second user, the relationship between the first parameter and the second parameter satisfies: $\alpha1*A1+\alpha2*A2+\beta*B=A1+A2+B$, where the first parameter includes $\alpha1$ and $\alpha2$, $\alpha1$ indicates a power adjustment coefficient corresponding to the user data of the first user, $\alpha2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and $\beta$ indicates

20

the second parameter, the processing module 1201 is further configured to: determine $\alpha 1$ and $\alpha 2$, where if a modulation order corresponding to the user data of the first user is higher than a modulation order corresponding to the user data of the second user, $\alpha 1 < \alpha 2$; and determine the second parameter $\beta$ based on $\alpha 1$ and $\alpha 2$.

In an implementation, if the user data includes the user data of the first user and the user data of the second user, the first parameter includes $\alpha 1$ and $\alpha 2$, $\alpha 1$ indicates the power adjustment coefficient corresponding to the user data of the first user, $\alpha 2$ indicates the power adjustment coefficient corresponding to the user data of the second user, and $\beta$ indicates the second parameter, the processing module 1201 is further configured to: determine $\alpha 1$ and $\alpha 2$, where if a modulation and coding scheme MCS index value corresponding to the user data of the first user is higher than an MCS index value corresponding to the user data of the second user, $\alpha 1 < \alpha 2$; and determine the second parameter $\beta$ based on $\alpha 1$ and $\alpha 2$.

In an implementation, the first parameter and the second parameter satisfy: a ratio of maximum transmit power to average transmit power of the first symbol sequence is less than or equal to a first threshold; and/or a maximum amplitude value for transmitting the first symbol sequence is less than or equal to a second threshold.

In an implementation, the interface module 1202 is further configured to: send at least one of the following information: a parameter index value, the first parameter, the second parameter, or the association relationship between the first parameter and the second parameter, where the parameter index value indicates a preset value corresponding to the first parameter and/or a preset value corresponding to the second parameter.

In an implementation, the processing module 1201 is further configured to: adjust a first modulation and coding scheme MCS index value to a second MCS index value based on the first parameter and the second parameter, where a modulation order corresponding to the first MCS index value is the same as a modulation order corresponding to the second MCS index value.

In addition, the communication apparatus 1200 may be further configured to implement a function of the second apparatus in the foregoing embodiments.

The interface module 1202 is configured to receive first information, where the first information includes at least one of the following information: a parameter index value, a first parameter, a second parameter, or an association relationship between a first parameter and a second parameter, the first parameter indicates a power adjustment coefficient corresponding to user data, the second parameter indicates a power adjustment coefficient corresponding to a reference signal, and the parameter index value indicates a preset value corresponding to the first parameter and/or a preset value corresponding to the second parameter.

The interface module 1202 is further configured to receive second information, where the second information includes a first symbol sequence, and the first symbol sequence includes a first sequence corresponding to the user data and a second sequence corresponding to the reference signal.

The processing module 1201 is configured to demodulate the first symbol sequence based on the first information.

In an implementation, the first parameter corresponds to a modulation and coding scheme MCS and/or the second parameter corresponds to a modulation and coding scheme MCS; or the first parameter corresponds to a generation manner of the reference signal and/or the second parameter corresponds to a generation manner of the reference signal; or the first parameter corresponds to a modulation scheme of the user data and/or the second parameter corresponds to a modulation scheme of the user data; or the first parameter corresponds to a generation manner of the reference signal and a modulation scheme of the user data and/or the second parameter corresponds to a generation manner of the reference signal and a modulation scheme of the user data.

In an implementation, the association relationship between the first parameter and the second parameter includes: The relationship between the first parameter and the second parameter is determined based on at least one of the following information: a quantity of resource elements corresponding to the first sequence, a quantity of resource elements corresponding to the second sequence, or a first indicator, where the first indicator indicates a resource occupation status corresponding to the first sequence and/or a resource occupation status corresponding to the second sequence.

In an implementation, the first indicator includes at least one of the following information: a data-to-reference signal resource ratio, a reference signal resource overhead, and data transmission efficiency, where the data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

In an implementation, the relationship between the first parameter $\alpha$ and the second parameter $\beta$ satisfies at least one of the following conditions: $\alpha*A + \beta*B = A + B$, where A indicates the quantity of resource elements corresponding to the first sequence, B indicates the quantity of resource elements corresponding to the second sequence, and both A and B are positive integers; or $\beta = 1 + (1-\alpha)*P$, where P indicates the data-to-reference signal resource ratio, and $P = A/B$; or $\beta = 1 + (1-\alpha)*$

(1/S-1), where S indicates the reference signal overhead, or $\beta=1+(1-\alpha)*J/(1-J)$, where J indicates the data transmission rate; or the like.

In an implementation, if the user data includes user data of a first user and user data of a second user, the relationship between the first parameter and the second parameter satisfies: $\alpha1*A1+\alpha2*A2+\beta*B=A1+A2+B$, where the first parameter includes $\alpha1$ and $\alpha2$, $\alpha1$ indicates a power adjustment coefficient corresponding to the user data of the first user, $\alpha2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and a modulation order corresponding to the user data of the first user is higher than a modulation order corresponding to the user data of the second user, $\alpha1<\alpha2$.

In an implementation, if the user data includes the user data of the first user and the user data of the second user, the first parameter includes $\alpha1$ and $\alpha2$, $\alpha1$ indicates the power adjustment coefficient corresponding to the user data of the first user, $\alpha2$ indicates the power adjustment coefficient corresponding to the user data of the second user, and an MCS index value corresponding to the user data of the first user is greater than an MCS index value corresponding to the user data of the second user, $\alpha1<\alpha2$.

When the communication apparatus 1300 is configured to implement functions of the first apparatus or the second apparatus in the foregoing embodiments, for other functions that can be implemented by the communication apparatus 1200, refer to related descriptions of the embodiment shown in FIG. 7 or FIG. 9. Details are not described again.

In a simple embodiment, a person skilled in the art may figure out that the communication apparatus 1200 may be in the form shown in FIG. 6. For example, the processor 601 in FIG. 6 may invoke the computer-executable instructions stored in the memory 603, to enable the communication apparatus 1200 to perform the method in the foregoing method embodiments.

For example, a function/implementation process of the processing module 1201 in FIG. 12 may be implemented by the processor 601 in FIG. 6. For another example, a function/implementation process of the interface module 1202 in FIG. 12 may be implemented through the communication interface 604 in FIG. 6.

It can be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (System on Chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be completed by computer instructions instructing related hardware (for example, a computer, a processor, a network device, and a terminal). The program may be stored in the computer-readable storage medium or the computer program product.

Optionally, this application further provides a communication system, including the first apparatus and the second apparatus in the foregoing embodiments.

The foregoing descriptions about implementations allow a person skilled in the art to clearly understand that, for the purpose of convenient and brief description, division of the foregoing functional modules is taken as an example for illustration. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

**Claims**

1.  A communication method, wherein the method comprises:

    modulating user data and a reference signal to obtain a first symbol sequence, wherein the first symbol sequence comprises a first sequence corresponding to the user data and a second sequence corresponding to the reference signal;
    determining average transmit power of the user data based on a first parameter, and determining average transmit power of the reference signal based on a second parameter, wherein the first parameter indicates a power adjustment coefficient corresponding to the user data, the second parameter indicates a power adjustment coefficient corresponding to the reference signal, the first parameter is a preset value and/or the second parameter is a preset value, or a relationship between the first parameter and the second parameter is determined based on at least one of the following information: a quantity of resource elements corresponding to the first sequence, a quantity of resource elements corresponding to the second sequence, or a first indicator, wherein the first indicator indicates a resource occupation status corresponding to the first sequence and/or a resource occupation status corresponding to the second sequence; and
    outputting the first symbol sequence.

2.  The method according to claim 1, wherein that the first parameter is the preset value and/or the second parameter is the preset value specifically comprises:

    the first parameter corresponds to a modulation and coding scheme MCS and/or the second parameter corresponds to a modulation and coding scheme MCS; or
    the first parameter corresponds to a generation manner of the reference signal and/or the second parameter corresponds to a generation manner of the reference signal; or

the first parameter corresponds to a modulation scheme of the user data and/or the second parameter corresponds to a modulation scheme of the user data; or

the first parameter corresponds to a generation manner of the reference signal and a modulation scheme of the user data and/or the second parameter corresponds to a generation manner of the reference signal and a modulation scheme of the user data.

3. The method according to claim 1 or 2, wherein that the first parameter is the preset value specifically comprises: the preset value is 1, 0.9, 0.85, 0.82, 0.8, 0.77, 0.75, 0.5, 0.48, or 0.45.

4. The method according to claim 1, wherein the first indicator comprises at least one of the following information: a data-to-reference signal resource ratio, a reference signal resource overhead, and data transmission efficiency, wherein the data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

5. The method according to claim 1 or 4, wherein a relationship between the first parameter $\alpha$ and the second parameter $\beta$ satisfies at least one of the following conditions:
$\alpha*A+\beta*B=A+B$, wherein A indicates the quantity of resource elements corresponding to the first sequence, B indicates the quantity of resource elements corresponding to the second sequence, and both A and B are positive integers; or

$$\beta=1+(1-\alpha)*P,$$

wherein P indicates the data-to-reference signal resource ratio, and P=A/B; or

$$\beta=1+(1-\alpha)*(1/S-1),$$

wherein S indicates the reference signal overhead; or

$$\beta=1+(1-\alpha)*J/(1-J),$$

wherein J indicates the data transmission rate; or the like.

6. The method according to claim 1 or 4, wherein if the user data comprises user data of a first user and user data of a second user, the relationship between the first parameter and the second parameter satisfies:

$$\alpha1*A1+\alpha2*A2+\beta*B=A1+A2+B,$$

wherein the first parameter comprises $\alpha1$ and $\alpha2$, $\alpha1$ indicates a power adjustment coefficient corresponding to the user data of the first user, $\alpha2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

7. The method according to any one of claims 1 to 6, wherein if the user data comprises the user data of the first user and the user data of the second user, the first parameter comprises $\alpha1$ and $\alpha2$, $\alpha1$ indicates the power adjustment coefficient corresponding to the user data of the first user, $\alpha2$ indicates the power adjustment coefficient corresponding to the user data of the second user, and $\beta$ indicates the second parameter, the method further comprises:

determining $\alpha1$ and $\alpha2$, wherein if a modulation order corresponding to the user data of the first user is higher than a modulation order corresponding to the user data of the second user, $\alpha1<\alpha2$; and
determining the second parameter $\beta$ based on $\alpha1$ and $\alpha2$.

8. The method according to any one of claims 1 to 7, wherein if the user data comprises the user data of the first user and the user data of the second user, the first parameter comprises $\alpha 1$ and $\alpha 2$, $\alpha 1$ indicates the power adjustment coefficient corresponding to the user data of the first user, $\alpha 2$ indicates the power adjustment coefficient corresponding to the user data of the second user, and $\beta$ indicates the second parameter, the method further comprises:

determining $\alpha 1$ and $\alpha 2$, wherein if a modulation and coding scheme MCS index value corresponding to the user data of the first user is higher than an MCS index value corresponding to the user data of the second user, $\alpha 1 < \alpha 2$; and
determining the second parameter $\beta$ based on $\alpha 1$ and $\alpha 2$.

9. The method according to any one of claims 1 to 8, wherein the first parameter and the second parameter satisfy:

a ratio of maximum transmit power to average transmit power of the first symbol sequence is less than or equal to a first threshold; and/or
a maximum amplitude value for transmitting the first symbol sequence is less than or equal to a second threshold.

10. The method according to any one of claims 1 to 9, wherein the method further comprises:
sending at least one of the following information: a parameter index value, the first parameter, the second parameter, or the association relationship between the first parameter and the second parameter, wherein the parameter index value indicates a preset value corresponding to the first parameter and/or a preset value corresponding to the second parameter.

11. The method according to any one of claims 1 to 10, wherein the method further comprises:
adjusting a first modulation and coding scheme MCS index value to a second MCS index value based on the first parameter and the second parameter, wherein a modulation order corresponding to the first MCS index value is the same as a modulation order corresponding to the second MCS index value.

12. A communication method, wherein the method comprises:

receiving first information, wherein the first information comprises at least one of the following information: a parameter index value, a first parameter, a second parameter, or an association relationship between a first parameter and a second parameter, the first parameter indicates a power adjustment coefficient corresponding to user data, the second parameter indicates a power adjustment coefficient corresponding to a reference signal, and the parameter index value indicates a preset value corresponding to the first parameter and/or a preset value corresponding to the second parameter;
receiving second information, wherein the second information comprises a first symbol sequence, and the first symbol sequence comprises a first sequence corresponding to the user data and a second sequence corresponding to the reference signal; and
demodulating the first symbol sequence based on the first information.

13. The method according to claim 12, wherein the first parameter corresponds to a modulation and coding scheme MCS and/or the second parameter corresponds to a modulation and coding scheme MCS; or

the first parameter corresponds to a generation manner of the reference signal and/or the second parameter corresponds to a generation manner of the reference signal; or
the first parameter corresponds to a modulation scheme of the user data and/or the second parameter corresponds to a modulation scheme of the user data; or
the first parameter corresponds to a generation manner of the reference signal and a modulation scheme of the user data and/or the second parameter corresponds to a generation manner of the reference signal and a modulation scheme of the user data.

14. The method according to claim 12 or 13, wherein that the first parameter is the preset value specifically comprises:
the preset value is 1, 0.9, 0.85, 0.82, 0.8, 0.77, 0.75, 0.5, 0.48, or 0.45.

15. The method according to claim 12, wherein the association relationship between the first parameter and the second parameter comprises:
the relationship between the first parameter and the second parameter is determined based on at least one of the following information: a quantity of resource elements corresponding to the first sequence, a quantity of resource elements corresponding to the second sequence, or a first indicator, wherein the first indicator indicates a resource occupation status corresponding to the first sequence and/or a resource occupation status corresponding to the second sequence.

16. The method according to claim 15, wherein the first indicator comprises at least one of the following information: a data-to-reference signal resource ratio, a reference signal resource overhead, and data transmission efficiency, wherein the data-to-reference signal resource ratio indicates a ratio of the quantity of resource elements corresponding to the first sequence to the quantity of resource elements corresponding to the second sequence, the reference signal resource overhead indicates a ratio of the quantity of resource elements corresponding to the second sequence to a quantity of resource elements corresponding to the first symbol sequence, and the data transmission efficiency indicates a ratio of a quantity of resources occupied by the first sequence in the first symbol sequence to a total quantity of resources occupied by the first symbol sequence.

17. The method according to any one of claims 12 to 16, wherein the relationship between the first parameter $\alpha$ and the second parameter $\beta$ satisfies at least one of the following conditions:

$$\alpha * A + \beta * B = A + B,$$

wherein A indicates the quantity of resource elements corresponding to the first sequence, B indicates the quantity of resource elements corresponding to the second sequence, and both A and B are positive integers; or

$$\beta = 1 + (1 - \alpha) * P,$$

wherein P indicates the data-to-reference signal resource ratio, and P=A/B; or

$$\beta = 1 + (1 - \alpha) * (1/S - 1),$$

wherein S indicates the reference signal overhead, or

$$\beta = 1 + (1 - \alpha) * J/(1 - J),$$

wherein J indicates the data transmission rate; or the like.

18. The method according to any one of claims 12 to 16, wherein if the user data comprises user data of a first user and user data of a second user, the relationship between the first parameter and the second parameter satisfies:

$$\alpha 1 * A1 + \alpha 2 * A2 + \beta * B = A1 + A2 + B,$$

wherein the first parameter comprises $\alpha 1$ and $\alpha 2$, $\alpha 1$ indicates a power adjustment coefficient corresponding to the user data of the first user, $\alpha 2$ indicates a power adjustment coefficient corresponding to the user data of the second user, $\beta$ indicates the second parameter, A1 indicates a quantity of resource elements corresponding to the user data of the first user in the first sequence, A2 indicates a quantity of resource elements corresponding to the user data of the second user in the first sequence, and B indicates the quantity of resource elements corresponding to the second sequence.

19. The method according to any one of claims 12 to 18, wherein if the user data comprises the user data of the first user and the user data of the second user, the first parameter comprises $\alpha 1$ and $\alpha 2$, $\alpha 1$ indicates the power adjustment coefficient corresponding to the user data of the first user, $\alpha 2$ indicates the power adjustment coefficient corresponding to the user data of the second user, and a modulation order corresponding to the user data of the first user is higher than a modulation order corresponding to the user data of the second user, $\alpha 1 < \alpha 2$.

20. The method according to any one of claims 12 to 18, wherein if the user data comprises the user data of the first user and the user data of the second user, the first parameter comprises $\alpha 1$ and $\alpha 2$, $\alpha 1$ indicates the power adjustment coefficient corresponding to the user data of the first user, $\alpha 2$ indicates the power adjustment coefficient corresponding to the user data of the second user, and an MCS index value corresponding to the user data of the first user is greater than an MCS index value corresponding to the user data of the second user, $\alpha 1 < \alpha 2$.

21. A communication apparatus, comprising a processor, wherein the processor is coupled to a memory, the memory is configured to store a program or instructions, and when the program or the instructions is/are executed by the processor, the method according to any one of claims 1 to 11 is performed.

22. A communication apparatus, comprising a processor, wherein the processor is coupled to a memory, the memory is configured to store a program or instructions, and when the program or the instructions is/are executed by the processor, the method according to any one of claims 12 to 20 is performed.

23. A computer-readable storage medium, wherein the computer-readable storage medium stores a computer program or instructions, and when the computer program or the instructions is/are executed, the method according to any one of claims 1 to 11 is performed, or the method according to any one of claims 12 to 20 is performed.

24. A computer program product, wherein the computer program product comprises computer program code, and when the computer program code is run on a computer, the method according to any one of claims 1 to 11 is performed, or the method according to any one of claims 12 to 20 is performed.

25. A communication system, wherein the communication system comprises the communication apparatus according to claim 21 and the communication apparatus according to claim 22.

| CP | DMRS | Interval | CP | User data |
|----|------|----------|----|-----------|

FIG. 1

FIG. 2

FIG. 3

FIG. 4

FIG. 5

Communication apparatus 600

FIG. 6

A first apparatus modulates user data and a reference signal to obtain a first symbol sequence — 701

The first apparatus determines average transmit power of the user data based on a first parameter, and determines average transmit power of the reference signal based on a second parameter — 702

The first apparatus outputs the first symbol sequence — 703

FIG. 7

First symbol sequence

| Second sequence (reference signal) | First sequence (user data) |
|---|---|

A quantity of REs is B          A quantity of REs is A

FIG. 8

A second apparatus receives first information — 901

The second apparatus receives second information, where the second information includes a first symbol sequence — 902

The second apparatus demodulates the first symbol sequence based on the first information — 903

FIG. 9

First symbol sequence

| Second sequence (reference signal) | User data of a first user | User data of a second user |
|---|---|---|

A quantity of REs is B          A quantity of REs is A1          A quantity of REs is A2

FIG. 10

**pi/2 BPSK DMRS + 64-QAM**

α = 1, 0.9, 0.8, 0.7, 0.6

FIG. 11

Communication apparatus 1200

Processing module 1201

Interface module 1202

FIG. 12

# EP 4 757 261 A1

## INTERNATIONAL SEARCH REPORT

| | International application No. |
|---|---|
| | **PCT/CN2023/116284** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 数据, 参考信号, 调制, 功率调整, 单载波, 峰均比, PAPR, data, dmrs, modulate, single carrier, qam, bpsk, zc

### C. DOCUMENTS CONSIDERED TO BE RELEVANT

| Category* | Citation of document, with indication, where appropriate, of the relevant passages | Relevant to claim No. |
|---|---|---|
| A | CN 101843068 A (ALCATEL-LUCENT SHANGHAI BELL CO., LTD.) 22 September 2010 (2010-09-22) claims 1-2 | 1-25 |
| A | US 2017331663 A1 (BATTELLE ENERGY ALLIANCE, LLC) 16 November 2017 (2017-11-16) entire document | 1-25 |
| A | US 2022216965 A1 (NEC CORP.) 07 July 2022 (2022-07-07) entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 April 2024** | **19 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116284**

| Patent document cited in search report | | | Publication date (day/month/year) | Patent family member(s) | | | Publication date (day/month/year) |
|---|---|---|---|---|---|---|---|
| CN | 101843068 | A | 22 September 2010 | WO | 2009089653 | A1 | 23 July 2009 |
| US | 2017331663 | A1 | 16 November 2017 | US | 10652072 | B2 | 12 May 2020 |
| | | | | WO | 2017197270 | A1 | 16 November 2017 |
| | | | | KR | 20190006966 | A | 21 January 2019 |
| US | 2022216965 | A1 | 07 July 2022 | JP | 2022551796 | A | 14 December 2022 |
| | | | | JP | 7306568 | B2 | 11 July 2023 |
| | | | | WO | 2021026912 | A1 | 18 February 2021 |

Form PCT/ISA/210 (patent family annex) (July 2022)